(19) Europäisches Patentamt / European Patent Office / Office européen des brevets

(11) **EP 2 834 001 B1**

(12) **EUROPÄISCHE PATENTSCHRIFT**

(45) Veröffentlichungstag und Bekanntmachung des Hinweises auf die Patenterteilung:
**01.11.2017** **Patentblatt 2017/44**

(21) Anmeldenummer: **13714591.8**

(22) Anmeldetag: **26.03.2013**

(51) Int Cl.:
*B01J 23/63* (2006.01)    *B01J 37/04* (2006.01)
*B01J 35/04* (2006.01)    *B01D 53/94* (2006.01)
*B01J 37/02* (2006.01)    *B01D 53/96* (2006.01)
*F02D 41/02* (2006.01)

(86) Internationale Anmeldenummer:
**PCT/EP2013/056360**

(87) Internationale Veröffentlichungsnummer:
**WO 2013/149881 (10.10.2013 Gazette 2013/41)**

(54) **VERFAHREN ZUR ENTFERNUNG VON KOHLENMONOXID UND KOHLENWASSERSTOFF AUS DEM ABGAS MAGER BETRIEBENER VERBRENNUNGSMOTOREN**

METHOD FOR REMOVING CARBON MONOXIDE AND HYDROCARBONS FROM THE EXHAUST GAS OF LEAN ENGINES

MÉTHODE POUR SÉPARER DU MONOXYDE DE CARBONE ET DES HYDROCARBURES DES GAZ D'ÉCHAPPEMENT DE MOTEURS TRAVAILLANT EN RÉGIME PAUVRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.04.2012   EP 12163305**

(43) Veröffentlichungstag der Anmeldung:
**11.02.2015   Patentblatt 2015/07**

(73) Patentinhaber: **Umicore AG & Co. KG**
**63457 Hanau-Wolfgang (DE)**

(72) Erfinder:
• **HOYER, Ruediger**
**63755 Alzenau-Hoerstein (DE)**
• **SCHULER, Anke**
**63843 Niedernberg (DE)**
• **FRANOSCHEK, Stefan**
**41334 Nettetal (DE)**
• **PAULY, Thomas R.**
**Clarkston, MI 48348 (DE)**
• **JESKE, Gerald**
**63543 Neuberg (DE)**

(56) Entgegenhaltungen:
WO-A1-93/10885    WO-A1-97/00119
DE-A1- 10 017 203    US-A1- 2010 183 490

**Beschreibung**

Die vorliegende Erfindung betrifft ein Verfahren zur Entfernung von Kohlenmonoxid und Kohlenwasserstoffen aus dem Abgas mager betriebener Verbrennungsmotoren, also beispielsweise von Dieselmotoren, bei sehr niedrigen Temperaturen.

Oxidationskatalysatoren zur Entfernung der Schadgase Kohlenmonoxid (CO) und Kohlenwasserstoffe (HC) aus dem Abgas von Diesel- und anderen mager betriebenen Verbrennungsmotoren sind aus dem Stand der Technik gut bekannt und basieren überwiegend auf Platin und Aluminiumoxid. Beispiele für Diesel-Oxidations-Katalysatoren können in den Schriften DE10308288 A1, DE19614540 A1, DE19753738 A1, DE3940758 A1, EP 0427970 A2 und DE4435073 A1 gefunden werden. Sie verwenden den im Dieselabgas in größerer Menge vorhandenen Sauerstoff, um die genannten Schadgase zu Kohlendioxid ($CO_2$) und Wasserdampf zu oxidieren.

Ein Problem des Dieselmotors ist, dass die Abgastemperaturen häufig zu niedrig sind, um die katalytische Aktivität des Katalysators zu gewährleisten. So liegen die Temperaturen im Teillastbetrieb des Dieselmotors nur zwischen 100°C und 250°C und erreichen erst im Volllastbetrieb Temperaturen von 550°C bis 650°C. Durch die Effizienzsteigerung moderner Dieselmotoren werden die durchschnittlichen Abgastemperaturen in Zukunft eher sinken. Um eine ausreichende katalytische Aktivität zu erreichen, muss der Katalysator daher eine sehr niedrige Light-off-Temperatur aufweisen. Die Light-off-Temperatur ist definiert als die Anspringtemperatur, d.h. die Temperatur bei der der Katalysator einen Umsatz von 50% von Kohlenmonoxid oder Kohlenwasserstoffen erreicht. Eine Erniedrigung der HC-Light-off-Temperatur ist aber schwer zu erreichen, da insbesondere gesättigte und aromatische Kohlenwasserstoffe nur schwer zu oxidieren sind.

Gemäß Stand der Technik kann dieses Problem beispielsweise durch Zusatz HC-speichernder Zeolithe zum Katalysator gelöst werden. Diese Zeolithe speichern Kohlenwasserstoffe im kalten Betriebszustand und geben sie erst bei höheren Temperaturen zur Umsetzung frei. Ein Beispiel eines Katalysator mit HC-Speicher ist in SAE Technical Paper Series "Advanced Studies an Diesel Aftertreatment Catalysis for Passenger Cars", 1996, beschrieben. Einen Einfluss auf das HC-Light-off-Verhalten des Katalysators, insbesondere hinsichtlich CO, hat dieses Verfahren aber nicht.

Unter mageren Abgasbedingungen kann das Edelmetall besonders durch Oxidation mit $NO_2$ in Oxidationsstufen > 0 vorliegen (siehe Appl. Catal. B: Environ. 93 (2009) 22-29), was zu einer Erhöhung der Light-off-Temperatur für CO und HC führt. Dies ist besonders bei der Verwendung von Ceroxid als Trägermaterial für die Edelmetalle der Fall, was zu einer weiteren Erhöhung der Light-off-Temperatur führt (siehe SAE2005-01-0476). Allerdings ist auf Ceroxid die Sinterung der Edelmetalle, die zu einer Abnahme der Aktivität des Katalysators führt, deutlich geringer als auf Aluminium- oder Zirkonoxid basierten Trägern. In WO2009/068289 A2 wird daher explizit ein Katalysator vorgeschlagen, der kein Ceroxid enthält.

Aufgabe vorliegender Erfindung ist es, ein Verfahren zur Entfernung von Kohlenmonoxid und Kohlenwasserstoffen aus dem Abgas mager betriebener Verbrennungsmotoren zur Verfügung zu stellen, bei dem die CO Light-off-Temperatur unterhalb von 130°C liegt.

Diese Aufgabe wird gelöst durch Verfahren zur Entfernung von Kohlenmonoxid und Kohlenwasserstoffen aus dem Abgas mager betriebener Verbrennungsmotoren, nach Anspruch 1. Üblicherweise beträgt die Menge an Platin, die auf dem feuerfesten Trägermaterial geträgert ist von 0,5 bis 10 Gew.-%, bevorzugt von 1 bis 5 Gew.-%, jeweils bezogen auf die Komponente (i).
Bezogen auf das Gesamtgewicht der Komponenten (i) bis (iii) beträgt die Menge des Platins (i) bevorzugt 0,4 bis 2 Gew.-%, besonders bevorzugt 1 bis 1,6 Gew.-%.
In einer Ausführungsform der vorliegenden Erfindung umfasst die Komponente (i) auch Palladium, d.h. auf dem feuerfesten Trägermaterial ist neben Platin auch Palladium geträgert. Bevorzugt wird in diesem Fall die Menge an Palladium so gewählt, dass, bezogen auf die Komponente (i), ein Gewichtsverhältnis Pt:Pd von 2:1 bis 10:1 resultiert.
Als feuerfeste Trägermaterialien der Komponente (i), auf denen das Platin bzw. Platin und Palladium geträgert sind, kommen alle dem Fachmann für diesen Zweck geläufigen Materialien in Betracht. Solche Materialien weisen eine BET-Oberfläche von 50 bis 250 m$^2$/g, bevorzugt von 100 bis 200 m$^2$/g auf (bestimmt nach DIN 66132) und sind insbesondere Aluminiumoxid, Siliziumoxid, Magnesiumoxid, Titanoxid, Ceroxid, Zeolith, sowie Mischungen oder Mischoxide davon. Bevorzugt sind Aluminiumoxid, Magnesium/Aluminium-Mischoxide und Aluminium/Silizium-Mischoxide. Sofern Aluminiumoxid verwendet wird, so ist es besonders bevorzugt stabilisiert, beispielsweise mit Lanthanoxid.

Die Belegung der feuerfesten Träger mit Platin bzw. Palladium erfolgt nach bekannten Verfahren, beispielsweise nach dem "incipient-wetness"-Verfahren unter Verwendung wasserlöslicher Platin- bzw. Palladiumverbindungen.

Der Begriff "reines Ceroxid" bezeichnet im Rahmen der vorliegenden Erfindung ein Produkt, das 90 bis 100 Gew.-% Ceroxid bezogen auf das Gesamtgewicht des reinen Ceroxides enthält. Bevorzugt enthält das reine Ceroxid 95 bis 100 Gew.% Ceroxid und besonders bevorzugt 98 bis 100 Gew.-% Ceroxid.
Erfindungsgemäß einzusetzende reine Ceroxide sind bekannt und im Handel erhältlich.

Sofern das Verhältnis von Platin zu Ceroxid $\leq 0.5$ (in g/cft : g/l) ist, umfasst der erfindungsgemäß einzusetzende Katalysator ein zusätzliches Edelmetall (iii). Aber auch wenn das Verhältnis von Platin zu Ceroxid > 0.5 (in g/cft : g/l) ist, kann zusätzliches Edelmetall (iii) anwesend sein.

Das zusätzliche Edelmetall (iii) kann je nach Anforderung Platin, Palladium und/oder Rhodium sein. Es wird bevorzugt in Mengen von 0 bis 0,5 Gew.%, besonders bevorzugt von 0 bis 0,2 Gew.-%, bezogen auf das Gesamtgewicht der Komponenten (i) bis (iii), eingesetzt. Sofern das zusätzliche Edelmetall (iii) vorhanden sein muss (weil Platin zu Ceroxid $\leq$ 0.5 (in g/cft : g/l) ist), beträgt die Menge bevorzugt 0,01 bis 0,5 Gew.%, besonders bevorzugt von 0,01 bis 0,2 Gew.-%, bezogen auf das das Gesamtgewicht der Komponenten (i) bis (iii).

Erfindungsgemäß steht das Platin und/oder Palladium gemäß (i), sowie falls enthalten, das zusätzliche Edelmetall gemäß (iii) direkt mit der Oberfläche des Ceroxides (ii) in Verbindung. Dies bedeutet aber nicht, dass das Edelmetall auf die Oberfläche des Ceroxides abgeschieden sein muss bzw. auf diesem geträgert ist, auch wenn dies eine mögliche Variante darstellt. Vielmehr kann das Edelmetall auch auf einem anderen Trägermaterial außer reinem Ceroxid geträgert sein und trotzdem direkt mit der Oberfläche des Ceroxids gemäß Komponente (ii) in Verbindung stehen.

Die Herstellung der direkten Verbindung mit der Oberfläche des Ceroxids (ii) mit dem auf einem oder mehreren feuerfesten Trägermaterialien geträgerten Platin bzw. Palladium kann zum Beispiel durch intensives Mischen der Komponenten, beispielsweise durch Mahlung von Ceroxid mit der Komponente (i) erfolgen.

Ebenso kann dies dadurch erfolgen, dass auf einem oder mehreren Trägern geträgertes zusätzliches Edelmetall (iii) mit reinem Ceroxid (ii) intensiv gemischt wird. Dies kann beispielsweise durch Mahlung der beiden Komponenten erfolgen.

Es kann aber selbstverständlich auch durch das an sich bekannte "incipientwetness"-Verfahren erfolgen.

Sofern das zusätzliche Edelmetall (iii) auf einem von reinem Ceroxid gemäß (ii) verschiedenen Träger abgeschieden ist, so können alle dem Fachmann für diesen Zweck geläufigen Trägermaterialien verwendet werden. Geeignete Trägermaterialien sind etwa Aluminiumoxid, Siliziumoxid, Magnesiumoxid, Titanoxid, Ceroxid, Zeolith, sowie Mischungen oder Mischoxide davon. Bevorzugt sind Aluminiumoxid, Magnesium/Aluminium-Mischoxide und Aluminium/Silizium-Mischoxide. Sofern Aluminiumoxid verwendet wird, so ist es besonders bevorzugt stabilisiert, beispielsweise mit Lanthanoxid.

Die Begriffe "mageres Argas", "fettes Argas", "magere Abgasbedingungen" und "fette Abgasbedingungen" sind dem Fachmann in ihrer Bedeutung bekannt. Bei einem stöchiometrischen Luft/Kraftstoffgemisch, bei der genau die Luftmenge vorhanden ist, die theoretisch zur vollständigen Verbrennung des Kraftstoffes benötigt wird, spricht man von einem Lambda-Wert von 1 ($\lambda$ = 1). Sofern Luft im Überschuss vorliegt spricht man von mageren Bedingungen, die Abgasbedingungen bzw. das entsprechende Abgas sind mager" ($\lambda$ > 1). Sofern im Gegensatz dazu Luft im Unterschuss vorliegt spricht man von fetten Bedingungen, die Abgasbedingungen bzw. das entsprechende Abgas sind "fett".

Der erfindungsgemäß zu verwendende Katalysator kann in einfacher Weise durch Mischen seiner Bestandteile in den gewünschten Mengenverhältnissen erhalten und in dieser Form verwendet werden.

Üblicherweise liegt der erfindungsgemäß zu verwendende Katalysator aber in Form einer Beschichtung auf einem katalytisch inerten Tragkörper vor. Als katalytisch inerte Tragkörper eignen sich grundsätzlich alle bekannten Tragkörper für Heterogenkatalysatoren. Bevorzugt sind monolithische und monolithähnliche Durchflusswabenkörper aus Keramik und Metall, sowie Partikelfiltersubstrate, wie sie üblicherweise zur Reinigung von Dieselmotorenabgasen eingesetzt werden. Ganz besonders bevorzugt sind keramische Durchflusswabenkörper und keramische Wandflussfiltersubstrate aus Cordierit, Aluminiumtitanat oder Siliziumcarbid.

Die Beschichtung des Tragkörpers mit dem erfindungsgemäß einzusetzenden Katalysator erfolgt in bekannter Weise, insbesondere dadurch, dass eine Beschichtungssuspension ("Washcoat"), die die Bestandteile des erfindungsgemäß einzusetzenden Katalysators oder Vorstufen davon enthält, auf den Tragkörper aufgebracht und anschließend getrocknet und kalziniert wird. Das Aufbringen kann nach bekannten Verfahren, wie Tauch-, Saug- und/oder Pumpverfahren erfolgen. Ein Washcoat zur Beschichtung eines Tragkörpers mit dem erfindungsgemäß einzusetzenden Katalysator ist bevorzugter Weise eine wässrige Suspension, die neben gegebenenfalls erforderlichen Hilfsmitteln mit Platin belegtes feuerfestes Trägermaterial (Komponente (i)), reines Ceroxid (Komponete (ii)) und eine lösliche Platin- oder Palladium-Verbindung (als Vorstufe der Komponente (iii)) enthält.

Das erfindungsgemäße Verfahren schließt insbesondere ein, den Katalysator nach Überschreiten einer Grenztemperaturbelastung unter mageren Abgasbedingungen kurzzeitig fettem, d.h. an Sauerstoff armem, Abgas zur Regeneration der katalytischen Aktivität auszusetzen.

Zur Vermeidung von Missverständnissen wird ausdrücklich darauf hingewiesen, dass es sich bei dieser Regeneration nicht um die bekannte Regeneration eines $NO_x$-Speicherkatalysators handelt, die dann erfolgt, wenn seine Speicherkapazität erschöpft ist und $NO_x$ durchbricht. Vielmehr handelt es sich um die Regeneration eines Oxidationskatalysators, die dann erfolgt, wenn er einer vorher definierten Grenztemperaturbelastung ausgesetzt war.

Die Zeit, die benötigt wird, damit der gesamte Katalysator mit fettem Abgas in Kontakt kommt, ist abhängig vom Zustand des Katalysators, dem Katalysatorvolumen und dem Volumenstrom und beträgt in der Regel 1-10 Sekunden.

Die Grenztemperaturbelastung ist als Grenztemperatur definiert, deren Überschreitung die Regeneration auslöst. Die Grenztemperatur ist abhängig vom gewünschten Tso-Wert für den CO-Light-off. Sie liegt bei einem $T_{50}$-Wert

für den CO-Light-off von 150°C bei 400°C und bei einem Tso-Wert für den CO-Light-off von 125°C bei 350°C

In einer weiteren Ausführungsform der vorliegenden Erfindung wird der Motor abgestellt, wenn er fettem Abgas ausgesetzt ist. Dadurch erfolgt die Regeneration des Katalysators während des Abschaltens des Motors.

Der erfindungsgemäß einzusetzende Katalysator kann, insbesondere wenn er als Beschichtung auf einem inerten Tragkörper vorliegt, in bekannter Weise allein oder als Bestandteil eines Katalysator-Systems zur Entfernung von Kohlenmonoxid und Kohlenwasserstoffen in dem erfindungsgemäßen Verfahren verwendet werden.

Die Erfindung wird an Hand der folgenden Beispiele und Figuren näher erläutert. Es zeigen:

Figur 1: CO-Konvertierung in Abhängigkeit der Temperatur (CO-Light-Off) der Vergleichskatalysatoren VK1 und des erfindungsgemäß zu verwendenden Katalysators K1 unter typischen Diesel-Bedingungen nach einer Konditionierung unter mageren Bedingungen.

Figur 2: CO-Konvertierung in Abhängigkeit der Temperatur (CO-Light-Off) der Vergleichskatalysatoren VK1 und des erfindungsgemäß zu verwendenden Katalysators K1 nach Regeneration (Applikation einer 3-fachen mager/fett-Prozedur).

Figur 3: CO-Konvertierung in Abhängigkeit der Temperatur (CO-Light-Off) des Vergleichskatalysators VK2 und der erfindungsgemäß zu verwendenden Katalysatoren K1, K1.2 und K2 nach Regeneration (Applikation einer 3-fachen mager/fett-Prozedur).

Figur 4: CO-Konvertierung in Abhängigkeit der Temperatur (CO-Light-Off) des Vergleichskatalysators VK3 und des erfindungsgemäß zu verwendenden Katalysators K3 nach Regeneration (Konditionierung 1 und Konditionierung 2)

Figur 5: Einfluss der Temperaturhistorie des erfindungsgemäß zu verwendenden Katalysators K1 auf die CO-Konvertierungskurven

Die in den folgenden Beispielen untersuchten Katalysatoren bestehen aus verschiedenen Komponenten. Diese Komponenten wurden jeweils zu einer wässerigen Beschichtungsdispersion verarbeitet, mit der Durchfluss-Wabenkörper aus Cordierit mit einer Zelldichte von 62 cm$^{-2}$ (Anzahl der Strömungskanäle der Wabenkörper pro Querschnittsfläche) mit Hilfe eines Tauchverfahrens beschichtet wurden. Die beschichteten Wabenkörper wurden getrocknet und anschließend bei 500°C für eine Dauer von 2 Stunden an Luft kalziniert. Das CO-Light-off-Verhalten der derart erhaltenen fertigen Katalysatoren wurde nach synthetischer Alterung in einer Labormodellgasanlage untersucht. Zwecks Alterung wurden die Katalysatoren bei einer Temperatur von 800°C für eine Dauer von 16 Stunden in einer hydrothermalen Atmosphäre, d.h. 10 vol% $O_2$ und 10 vol% $H_2O$ in Stickstoff, gelagert.

Testbedingungen:

In einer Labor-Modellgasanlage wurde das CO-Light-Off-Verhalten der thermisch vorbehandelten ("gehalterten") Katalysatoren aus den nachfolgenden Beispielen und Vergleichsbeispielen bestimmt. Dazu wurden die Prüflinge nacheinander in den Reaktor der Modellgasanlage eingebaut und der folgenden Testprozedur unterzogen:

1. Zur Darstellung typischer Diesel-Bedingungen, in denen der Katalysator nur mit magerem Abgas in Kontakt steht, wurden die Prüflinge in der Abgaszusammensetzung "Konditionierung 1" mit einer Heizrate von 7,5°C pro Minute auf 550°C aufgeheizt und dann wieder auf 80°C abgekühlt.

2. Danach wurden die Katalysatoren zur Bestimmung des CO-Light-Off-Verhaltens in der Abgaszusammensetzung für den Light-Off mit einer Heizrate von 7,5°C pro Minute auf 550°C aufgeheizt. Die CO-Konvertierung wurde dabei entsprechend der Formel

$$\text{CO-Konvertierung [\%]} = 100\% \times (c(CO)_{ein} - c(CO)_{aus}) / c(CO)_{ein}$$

berechnet. Hierin bezeichnen:

$c(CO)_{ein}$     die Konzentration von CO am Katalysatoreingang

$c(CO)_{aus}$     die Konzentration von CO am Katalysatorausgang

3. Zur Darstellung des CO-Light-Off-Verhaltens wurden die Prüflinge dreimal in Folge der "Konditionierung 2" unterzogen, die aus einer 200 Sekunden langen "mager"-Phase und einer anschließenden 5 Sekunden langen fett"-Phase besteht.

4. Nach Abkühlen auf 80°C wurde wieder die CO-Konvertierung entsprechend der oben beschriebenen Light-Off-Prozedur bestimmt.

| Komponente | Konditionierung 1 | Konditionierung 2 | | Light-off |
|---|---|---|---|---|
| | | mager-Phase | fett-Phase | |
| NO [ppm] | 50 | 25 | 25 | 50 |
| $NO_2$ [ppm] | 50 | 25 | 25 | 50 |
| $O_2$ [vol%] | 5 | 7 | 2 | 5 |
| CO [ppm] | 1000 | 1000 | 4 | 1000 |
| HC [ppm] ($C_3H_6/C_3H_8$ = 1/1) | 150 | 150 | 800 | 150 |
| $CO_2$ [vol%] | 6 | 6 | 6 | 6 |
| $H_2O$ [vol%] | 6,6 | 6,6 | 6,6 | 6,6 |
| Balance $N_2$ | Rest | Rest | Rest | Rest |
| Raumgeschwindigkeit [1/h] | 50000 | 36000 | 48000 | 50000 |
| Dauer [sec] | 300 | 200 | 5 | |

Vergleichsbeispiel 1 (Vergleichskatalysator VK1)

Zur Herstellung eines Pt-basierten Oxidationskatalysators wurde ein Lanthan-stabilisiertes Aluminiumoxid mit 3 Gew.-% $La_2O_3$ bezogen auf das Gesamtgewicht des Mischoxides im "incipient-wetness"-Verfahren mit Platin aus Platin-Tetraamin-Acetat belegt. Nach thermischer Fixierung des Platins wurde das Pulver in Wasser suspendiert und mit 100 g/l dieser Suspension ein Durchfluß-Wabenkörper aus Kordierit mit einer Zelldichte von 62 cm$^{-1}$ mit Hilfe eines Tauchverfahrens beschichtet. Der Wabenkörper wurde anschließend getrocknet und bei 500°C für die Dauer von 2 Stunden an Luft kalziniert. Der so erhaltene Katalysator VK1 enthielt 3,53 g/l Platin.

Beispiel 1 (Erfindungsgemäß zu verwendender Katalysator K1)

In Analogie zu Vergleichsbeispiel VK1 wurde ein Katalysator hergestellt, der zusätzlich 150 g/l eines hochoberflächigen Ceroxids mit einem Ceroxid-Gehalt von 100 Gew.-% enthält. Auf das Ceroxid wurden 0,106 g/l Palladium durch Einrühren von Palladiumnitrats in die Beschichtungssuspension aufgebracht.

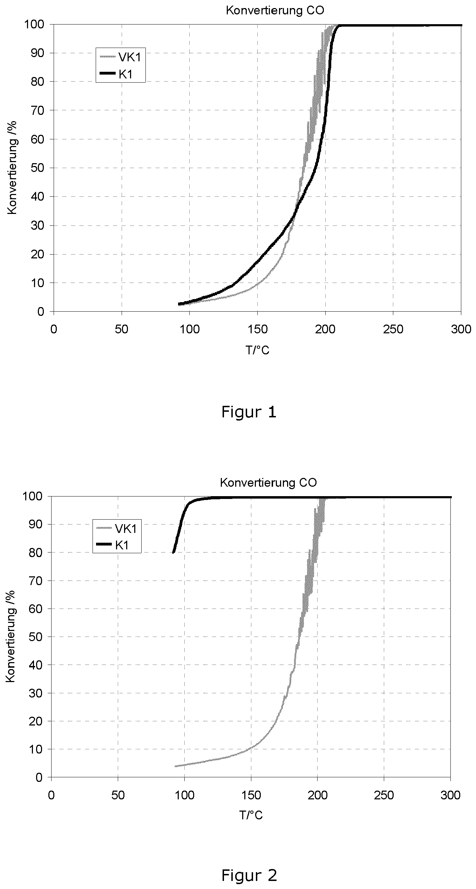

In den Figuren 1 und 2 ist die CO-Konvertierung des Vergleichskatalysators VK1 und des Katalysators K1 in Abhängigkeit von der Temperatur nach Konditionierung 1 bzw. Konditionierung 2 gezeigt. Während unter typischen Diesel-Bedingungen (Figur 1) der Vergleichskatalysator VK1 mit 195°C die niedrigste CO-Light-Off-Temperatur (Temperatur bei 80% CO-Konvertierung) zeigt, wird durch die Konditionierung 2 die Light-Off-Temperatur des Katalysators K1 auf $T_{80}$ < 100°C geschoben (Figur 2). Dagegen zeigt der Vergleichskatalysator VK1 auch nach der Konditionierung 2 keine Veränderung in der Light-Off-Temperatur.

Beispiel 1.2 (erfindungsgemäß zu verwendender Katalysator K1.2) Katalysator K1.2 unterscheidet sich von Katalysator K1 dadurch, dass er kein Palladium enthält.

Beispiel 2 (erfindungsgemäß zu verwendender Katalysator K2)

Katalysator K2 ist entsprechend Katalysator K1 hergestellt. Im Unterschied zu diesem enthält der er aber nur 1,77 g/l Pt und nur 100 g/l des hochoberflächigen Ceroxides, auf das 0,106 g/l Palladium aufgebracht sind. Das Verhältnis von Platin zu Ceroxid berechnet als Pt in g/cft : Ceroxid in g/l beträgt 0,5.

Vergleichsbeispiel 2 (Vergleichskatalysator VK2)

Der Vergleichskatalysator VK2 wurde entsprechend Katalysator K2 hergestellt mit dem Unterschied, dass der Katalysator VK2 kein Palladium enthält.

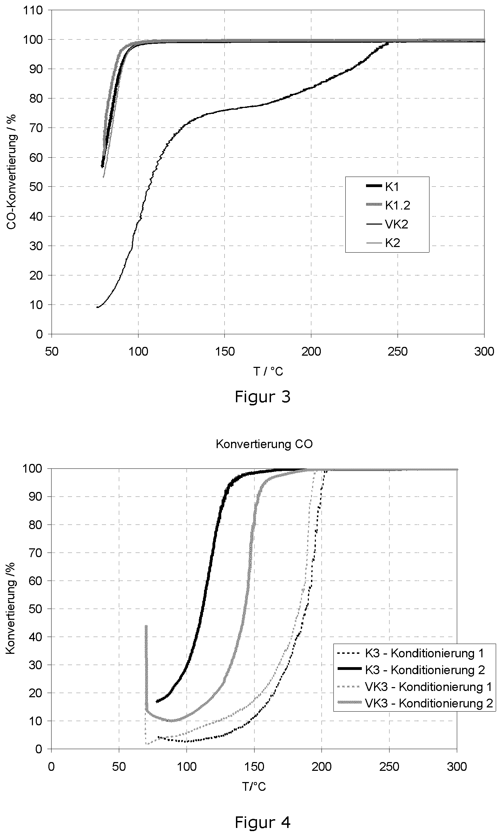

In Figur 3 ist die CO-Konvertierung der Katalysatoren K1, K1.2, K2 und VK2 nach mager/fett-Prozedur gemäß Konditionierung 2 gezeigt. Dabei zeigen die Katalysatoren K1, K1.2, K2 eine Light-off-Temperatur $T_{80}$ von unter 100°C, während die Light-off-Temperatur $T_{80}$ des Vergleichskatalysator VK2 bei ca. 180°C liegt.

Während die Katalysatoren K1 und K1.2, die ein Pt: $CeO_2$ Verhältnis von 0,67 aufweisen, mit und ohne zusätzliches Palladium einen niedrigen CO-Light-off zeigen, zeigen die Katalysatoren K2 und VK2 mit niedriger Platin-Beladung

(Pt:CeO$_2$ ist in beiden Fällen 0,5) einen niedrigen CO-Light-off nur in der Gegenwart von Palladium.

Bei erfindungsgemäß zu verwendenden Katalysatoren muss das Ceroxid in engem Kontakt mit einer ausreichenden Menge Platin und/oder Palladium stehen. Dies geschieht im Katalysator K1.2 durch Mischen der Pt/Alumina-Komponente mit dem Ceroxid in einer Washcoat-Suspension. Ist das Pt: Ceroxid-Verhältnis (in g/cft : g/l) ≤ 0,5, so ist der enge Kontakt zwischen Platin und Ceroxid nicht mehr ausreichend und das Ceroxid muss in engen Kontakt mit zusätzlichen Edelmetall, bevorzugt Palladium, gebracht werden.

Vergleichsbeispiel 3: (Vergleichskatalysator VK3)

Zur Herstellung des Vergleichskatalysators VK3 wurde ein Mg/Al-Mischoxid enthaltend 18 Gew.-% MgO und 10 Gew.-% CeO$_2$ bezogen auf des Gesamtgewicht des Mischoxides und ein mit 3 Gew.-% Lanthanoxid stabilisiertes Aluminiumoxid, das zusätzlich mit 17 Gew.-% CeO$_2$ belegt wurde, im "incipient-wetness"-Verfahren mit Platin belegt und nach thermischer Fixierung des Platins in Wasser suspendiert. Zu dieser Beschichtungsdispersion wurden folgende weitere Komponenten hinzugefügt

- Palladium in Form von Palladiumnitrat;
- Ein Cer-Mischoxid enthaltend 85 Gew.-% CeO$_2$ 5 Gew.-% La$_2$O$_3$, 5 Gew.-%, Al$_2$O$_3$ und 5 Gew.-% Pr$_6$O$_{11}$ bezogen auf das Mischoxid, das mit einer Bariumverbindung (9 Gew.-% Barium berechnet als Oxid und bezogen auf das Gesamtgewicht der Ba/Cer-Mischoxid-Verbindung) belegt wurde; sowie
- Ein mit Lanthanoxid stabilisiertes Aluminiumoxid, das nach der "incipient-wetness"-Methode und anschließender thermischer Fixierung mit Rhodium aus Rhodiumnitrat-Lösung belegt wurde.

Mit der so hergestellten Beschichtungsdispersion wurde entsprechend dem für Vergleichskatalysator VK1 beschriebenen Verfahren Vergleichskatalysator VK3 hergestellt, der 4,4 g/l Edelmetall bezogen auf das Volumen des fertigen Katalysators mit einem Verhältnis von Pt:Pd:Rh von 20:4:1 enthielt.

Beispiel 3: (erfindungsgemäß zu verwendender Katalysator K3)

In vollständiger Analogie zu Vergleichsbeispiel 3 wurde Katalysator K3 hergestellt, wobei das Cer-Mischoxid durch ein Ceroxid mit 100 Gew.-% CeO$_2$ ersetzt wurde. Der so erhaltene Katalysator enthielt ebenfalls 4,4 g/l Edelmetall bezogen auf das Volumen des fertigen Katalysator mit einem Verhältnis von Pt:Pd:Rh von 20:4:1.

In Figur 4 ist die CO-Konvertierung von Vergleichskatalysator VK3 und Katalysator K3 unter typischen Diesel-Bedingungen (Konditionierung 1) und nach Anwendung einer mager/fett-Prozedur (Konditionierung 2) gezeigt. Beide Katalysatoren zeigen nach Konditionierung 2 eine deutliche Verringerung der CO-Light-Off-Temperatur, aber nur Katalysator K3 zeigt mit einer T$_{80}$ = 125°C eine Light-Off-Temperatur unterhalb 130°C.

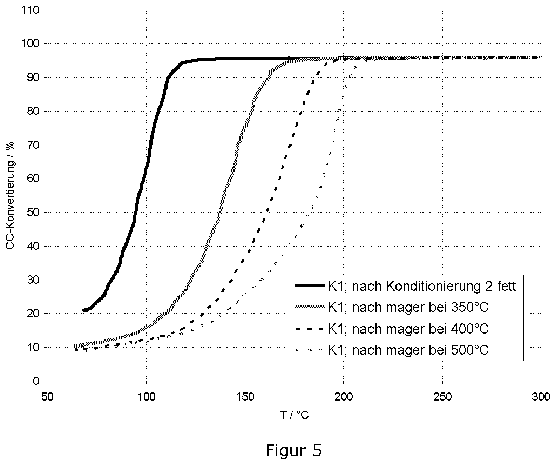

In Figur 5 ist gezeigt, wie sich das CO-Light-Off-Verhalten des Katalysators K1 durch den Einfluss der Temperatur des Katalysators unter mageren Bedingungen ändert. Dazu wurde der erste Light-Off-Test bei 350°C gestoppt, abgekühlt und der nächste Light-Off-Test gestart. Damit hat der Katalystor K1 vor dem Light-off-Test bezeichnet mit K1 -350°C diese Temperatur erfahren. Dies wurde mit den Temperaturen 400°C und 500°C wiederholt. Es zeigt sich, dass mit zunehmender Temperatur, die der Katalysator K1 unter mageren Abgasbedingungen erfährt, die Light-Off-Temperatur ansteigt. Soll die CO-Light-Off-Temperatur des Katalysators K1 unterhalb 150°C gehalten werden, so muss nach einer Temperaturexkursion nach 400°C die Aktivität durch Anwendung eines Pulses mit fettem Abgas wieder hergestellt werden.

**Patentansprüche**

1. Verfahren zur Entfernung von Kohlenmonoxid und Kohlenwasserstoffen aus dem Abgas mager betriebener Verbrennungsmotoren, wobei das Abgas über einen Katalysator geleitet wird, der

(i) Platin geträgert auf einem oder mehreren feuerfesten Trägermaterialien,
(ii) reines Ceroxid, das 90 bis 100 Gew.-% Ceroxid bezogen auf das Gesamtgewicht des reinen Ceroxides enthält, sowie, wenn das Verhältnis von Platin zu Ceroxid <= 0,0175 berechnet als Pt in g/l: Ceroxid in g/l (<= 0,5 berechnet als Pt in g/cft : Ceroxid in g/l) ist,
(iii) ein zusätzliches Edelmetall ausgewählt aus der Gruppe bestehend aus Platin, Palladium, Rhodium und Mischungen davon enthält, wobei das Platin (i) und falls enthalten, das zusätzliche Edelmetall (iii) direkt mit der Oberfläche des Ceroxides (ii) in Verbindung steht, enthält **dadurch gekennzeichnet, dass** der Katalysator nach Überschreiten einer Grenztemperaturbelastung unter mageren Abgasbedingungen fettem Abgas zur Regeneration der katalytischen Aktivität ausgesetzt wird bis der gesamte Katalysator mit fettem Abgas in Kontakt kommt, wobei die Regeneration dann freigegeben wird, wenn die Temperatur des Katalysators unterhalb der Regenerierungstemperatur von 350°C liegt, wobei die Grenztemperaturbelastung als Grenztemperatur definiert ist, deren Überschreitung die Regeneration auslöst und wobei die Grenztemperatur abhängig ist vom gewünschten $T_{50}$-Wert des Katalysators für den CO-Light-Off und 400°C beträgt, wenn der $T_{50}$-Wert für den CO-Light-off bei 150°C liegen soll, und 350°C, wenn der $T_{50}$-Wert für den CO-Light-off bei 125°C liegen soll.

2. Verfahren nach Anspruch 1, **dadurch gekennzeichnet, dass** die Menge des Platins (i) 0,4 bis 2 Gew.-%, bezogen auf das Gesamtgewicht der Komponenten (i) bis (iii), beträgt.

3. Verfahren nach Anspruch 1 und/oder 2, **dadurch gekennzeichnet, dass** auf dem feuerfesten Trägermaterial neben Platin Palladium geträgert ist.

4. Verfahren nach Anspruch 3, **dadurch gekennzeichnet, dass** die Menge an Palladium so gewählt ist, dass, bezogen auf die Komponente (i), ein Gewichtsverhältnis Pt:Pd von 2:1 bis 10:1 resultiert.

5. Verfahren nach einem oder mehreren der Ansprüche 1 bis 4, **dadurch gekennzeichnet, dass** als feuerfeste Trägermaterialien der Komponente (i) Aluminiumoxid, Siliziumoxid, Magnesiumoxid, Titanoxid, Ceroxid, Zeolith oder Mischungen oder Mischoxide davon eingesetzt werden.

6. Verfahren nach einem oder mehreren der Ansprüche 1 bis 5, **dadurch gekennzeichnet, dass** das zusätzliche Edelmetall (iii) in Mengen von 0 bis 0,5 Gew.%, bezogen auf das das Gesamtgewicht der Komponenten (i) bis (iii), eingesetzt wird.

7. Verfahren nach einem oder mehreren der Ansprüche 1 bis 6, **dadurch gekennzeichnet, dass** der Katalysator für 1 bis 10 Sekunden fettem Abgas ausgesetzt wird.

8. Verfahren nach einem oder mehreren der Ansprüche 1 bis 7, **dadurch gekennzeichnet, dass** der Motor abgestellt wird, wenn er fettem Abgas ausgesetzt ist.

**Claims**

1. Method for the removal of carbon monoxide and hydrocarbons from the exhaust gas of lean-operated internal combustion engines, wherein the exhaust gas is passed over a catalyst, which contains

(i) platinum supported on one or more refractory supporting materials,
(ii) pure cerium oxide, which contains 90 to 100 wt% cerium oxide relative to the total weight of the pure cerium oxide, as well as, if the ratio of platinum to cerium oxide is <= 0.0175 calculated as Pt in g/l:cerium oxide in g/l (<= 0.5 calculated as Pt in g/cft:cerium oxide in g/l)
(iii) an additional precious metal selected from the group consisting of platinum, palladium, rhodium, and mixtures thereof, wherein the platinum (i) and, if included, the additional precious metal (iii) is in direct contact with the surface of the cerium oxide (ii), **characterized in that,** after exceeding a limit temperature load under lean exhaust gas conditions, the catalyst is exposed to rich exhaust gas for the regeneration of the catalytic activity until the entire catalyst comes into contact with rich exhaust gas, wherein the regeneration is then enabled when the temperature of the catalyst is below the regeneration temperature of 350°C, wherein the limit temperature load is defined as a limit temperature which, if exceeded, triggers regeneration and wherein the limit temperature depends upon the desired $T_{50}$ value of the catalyst for the CO light-off and amounts to 400°C, if the $T_{50}$ value for the CO light-off is to be 150°C, and 350°C, if the $T_{50}$ value for the CO light-off is to be 125°C.

2. Method according to claim 1, **characterized in that** the quantity of platinum (i) is 0.4 to 2 wt% relative to the total weight of components (i) through (iii).

3. Method according to claim 1 and/or 2, **characterized in that,** besides platinum, palladium is supported on the refractory supporting material.

4. Method according to claim 3, **characterized in that** the amount of palladium is selected such that a weight ratio of Pt:Pd of 2:1 to 10:1 relative to component (i) is achieved.

5. Method according to one or more of claims 1 through 4, **characterized in that** aluminum oxide, silicon oxide, magnesium oxide, titanium oxide, cerium oxide, zeolite, or mixtures or mixed oxides thereof are used as refractory substrate materials of component (i).

6. Method according to one or more of claims 1 through 5, **characterized in that** the additional precious metal (iii) is used in amounts of 0 to 0.5 wt% relative to the total weight of components (i) through (iii).

7. Method according to one or more of claims 1 through 6, **characterized in that** the catalyst is exposed to rich exhaust gas for 1 to 10 seconds.

8. Method according to one or more of claims 1 through 7, **characterized in that** the engine is switched off if it is exposed to rich exhaust gas.


**Revendications**

1. Procédé pour éliminer le monoxyde de carbone et les hydrocarbures du gaz d'échappement de moteurs à combustion interne à fonctionnement maigre, le gaz d'échappement étant guidé sur un catalyseur qui contient

  (i) du platine supporté sur un ou plusieurs matériaux support réfractaires,
  (ii) de l'oxyde de cérium pur, qui contient 90 à 100 % en poids d'oxyde de cérium, par rapport au poids total de l'oxyde de cérium pur, ainsi que, lorsque le rapport de platine à oxyde de cérium est $\leq 0{,}0175$, calculé sous forme de Pt en g/l : oxyde de cérium en g/l ($\leq 0{,}5$ calculé sous forme de Pt en g/cft (pied cube) : oxyde de cérium en g/l)
  (iii) un métal noble supplémentaire, choisi dans le groupe constitué par le platine, le palladium, le rhodium et leurs mélanges, le platine (i) et, s'il est contenu, le métal noble supplémentaire (iii) étant directement en contact avec la surface de l'oxyde de cérium (ii), **caractérisé en ce que** le catalyseur, après le dépassement d'une sollicitation par une température limite dans des conditions de gaz d'échappement maigre, est soumis à l'action d'un gaz d'échappement riche pour la régénération de l'activité catalytique jusqu'à ce que la totalité du catalyseur soit en contact avec le gaz d'échappement riche, la régénération étant libérée lorsque la température du catalyseur se situe sous la température de régénération de 350 °C, la sollicitation par une température limite étant définie comme la température limite dont le dépassement déclenche la régénération et la température limite dépendant de la valeur $T_{50}$ souhaitée du catalyseur pour l'allumage du CO et valant 400 °C lorsque la valeur $T_{50}$ pour l'allumage du CO doit se situer à 150 °C et valant 350 °C lorsque la valeur $T_{50}$ pour l'allumage du CO doit se situer à 125 °C.

2. Procédé selon la revendication 1, **caractérisé en ce que** la quantité de platine (i) se situe de 0,4 jusqu'à 2 % en poids, par rapport au poids total des composants (i) à (iii).

3. Procédé selon la revendication 1 et/ou 2, **caractérisé en ce que** du palladium est supporté sur le matériau support réfractaire, en plus du platine.

4. Procédé selon la revendication 3, **caractérisé en ce que** la quantité de palladium est choisie de manière telle que, par rapport au composant (i), on obtienne un rapport pondéral Pt:Pd de 2:1 à 10:1.

5. Procédé selon une ou plusieurs des revendications 1 à 4, **caractérisé en ce qu'**on utilise, comme matériaux support réfractaires du composant (i), l'oxyde d'aluminium, l'oxyde de silicium, l'oxyde de magnésium, l'oxyde de titane, l'oxyde de cérium, la zéolithe ou des mélanges ou des oxydes mixtes de ceux-ci.

6. Procédé selon une ou plusieurs des revendications 1 à 5, **caractérisé en ce que** le métal noble supplémentaire (iii) est utilisé en des quantités de 0 à 0,5 % en poids, par rapport au poids total des composants (i) à (iii).

7. Procédé selon une ou plusieurs des revendications 1 à 6, **caractérisé en ce que** le catalyseur est soumis pendant 1 à 10 secondes à l'action du gaz d'échappement riche.

8. Procédé selon une ou plusieurs des revendications 1 à 7, **caractérisé en ce que** le moteur est arrêté lorsqu'il est soumis à l'action du gaz d'échappement riche.

Figur 1

Figur 2

Figur 3

Figur 4

Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10308288 A1
- DE 19614540 A1
- DE 19753738 A1
- DE 3940758 A1
- EP 0427970 A2
- DE 4435073 A1
- WO 2009068289 A2

**In der Beschreibung aufgeführte Nicht-Patentliteratur**

- Advanced Studies an Diesel Aftertreatment Catalysis for Passenger Cars. *SAE Technical Paper Series,* 1996
- *Appl. Catal. B: Environ.,* 2009, vol. 93, 22-29